# EUROPÄISCHE PATENTSCHRIFT

(11) **EP 3 290 307 B1**
(45) Veröffentlichungstag und Bekanntmachung des Hinweises auf die Patenterteilung: **22.05.2019**
(21) Anmeldenummer: 17185666.9
(22) Anmeldetag: 10.08.2017
(51) Int. Cl.: B62D 59/04

(54) **MONTAGEVORRICHTUNG UND ANHÄNGER**
INSTALLATION DEVICE AND TRAILER
DISPOSITIF DE MONTAGE ET REMORQUE

(30) Priorität: 19.08.2016 DE 202016104573 U
(43) Veröffentlichungstag der Anmeldung: 07.03.2018
(73) Patentinhaber: Reich GmbH Regel- und Sicherheitstechnik, 35713 Eschenburg-Wissenbach (DE)
(72) Erfinder: BENDER, Steffen, 35713 Eschenburg (DE)
(74) Vertreter: Hofstetter, Schurack & Partner

(56) Entgegenhaltungen:
- EP-A2- 1 840 019
- DE-A1-102013 107 914
- DE-U1-202013 104 040
- DE-U1-202014 100 281

## Beschreibung

Die vorliegende Erfindung betrifft eine Montagevorrichtung zur Befestigung und Abstützung eines Hilfsantriebs an einem Längsträger eines Stützrahmens eines Anhängers, insbesondere einem Wohnwagen, einem Bootsanhänger, einem Verkaufswagen, einem Transportanhänger oder einem Autotransportanhänger, wobei die Montagevorrichtung mindestens zwei miteinander verbindbare Halteelemente umfasst und die Halteelemente derart ausgebildet sind, dass sie in montiertem Zustand mit jeweils einer Halteplatte zumindest teilweise an einem aufrecht verlaufenden Mittelsteg des Längsträgers beidseitig anliegen. Die Erfindung betrifft weiterhin einen Anhänger und einen Stützrahmen eines Anhängers mit mindestens einer Montagevorrichtung. Eine solche Vorrichtung ist von DE 10 2013 107914 bekannt.

Hilfsantriebe für Anhänger, insbesondere für Wohnwagen, Bootsanhänger, Verkaufswagen, Transportanhänger und ähnliche Anhänger sind in einer großen Vielzahl bekannt. Sie dienen insbesondere dazu, den Anhänger in abgekoppeltem Zustand zu bewegen. Dies betrifft insbesondere Anhänger, die beispielsweise auf Campingplätzen oder Wohnwagen-Parkplätzen bewegt und rangiert werden müssen. Bei diesen bekannten Hilfsantrieben ist mindestens ein Antriebselement, insbesondere eine Antriebswalze mit einem Rad des Anhängers in Eingriff bringbar. Mithilfe entsprechender Antriebseinheiten, zum Beispiel Elektromotoren, wird die Antriebswalze angetrieben, wodurch sich das mit der Antriebswalze in Eingriff befindliche Rad des Anhängers dreht beziehungsweise bewegt. Damit ist ein sicheres Rangieren des Anhängers in abgekoppeltem Zustand möglich. Entscheidend für den sicheren Betrieb des Hilfsantriebs ist dessen Befestigung, insbesondere an einem Stützrahmen beziehungsweise Fahrgestell des Anhängers.

Dabei dürfen die vorgegeben strukturellen Eigenschaften des Stützrahmens nicht nachteilig verändert werden. Zudem sollte der Hilfsantrieb derart befestigt werden, dass weiterhin eine genügend große Bodenfreiheit zwischen der Unterseite des Hilfsantriebs und dem Untergrund gegeben ist.

Es ist daher Aufgabe der vorliegenden Erfindung, eine gattungsgemäße Montagevorrichtung, einen gattungsgemäßen Anhänger mit mindestens einem Hilfsantrieb sowie einen Stützrahmen eines Anhängers bereitzustellen, durch die einerseits eine sichere Befestigung des Hilfsantriebs ohne eine nachteilige Veränderung der vorgegeben strukturellen Eigenschaften des Stützrahmens und gleichzeitig eine verbesserte Bodenfreiheit zwischen der Unterseite des Hilfsantriebs und dem Untergrund gewährleistet ist.

Zur Lösung dieser Aufgaben dienen eine Montagevorrichtung mit den Merkmalen des Anspruchs 1, ein Anhänger mit den Merkmalen des Anspruchs 13 sowie ein Stützrahmen mit den Merkmalen des Anspruchs 16. Vorteilhafte Ausgestaltungen mit zweckmäßigen Weiterbildungen der Erfindung sind in den Unteransprüchen angegeben, wobei vorteilhafte Ausgestaltungen der Montagevorrichtung als vorteilhafte Ausgestaltungen des erfindungsgemäßen Anhängers und umgekehrt anzusehen sind.

Eine erfindungsgemäße Montagevorrichtung zur Befestigung und Abstützung eines Hilfsantriebs an einem Längsträger eines Stützrahmens eines Anhängers, insbesondere einem Wohnwagen, einem Bootsanhänger, einem Verkaufswagen, einem Transportanhänger oder einem Autotransportanhänger, umfasst mindestens zwei miteinander verbindbare Halteelemente, wobei die Halteelemente derart ausgebildet sind, dass sie in montiertem Zustand mit jeweils einer Halteplatte zumindest teilweise an einem aufrecht verlaufenden Mittelsteg des Längsträgers beidseitig anliegen. Erfindungsgemäß weist eine der Halteplatten einen Führungsstutzen zur Aufnahme eines Tragarms des Hilfsantriebs und die andere Halteplatte eine korrespondierende Öffnung zur Aufnahme und den Durchtritt des Führungsstutzens auf. Dabei ist der Führungsstutzen derart an der Halteplatte angeordnet, dass er durch eine korrespondierende Öffnung im Mittelsteg des Längsträgers durchführbar ist. Eine derartige Ausgestaltung der erfindungsgemäßen Montagevorrichtung ermöglicht es, dass einerseits die vorgegebenen strukturellen Eigenschaften des Längsträgers des Stützrahmens nicht nachteilig verändert werden. Die Öffnung für den Führungsstutzen im Mittelsteg des Längsträgers ist entweder bereits vorhanden oder kann ohne großen Aufwand und ohne nachteilige Veränderung der strukturellen Eigenschaften des Längsträgers ausgebildet werden. Durch die Anordnung und Ausgestaltung der Montagevorrichtung kommt der Hilfsantrieb im montierten Zustand im Bereich des Mittelstegs des Längsträgers zu liegen, sodass die ursprüngliche Bodenfreiheit zwischen der Unterseite des Längsträgers und dem Untergrund nicht oder nur unwesentlich verringert wird. Unter "Stützrahmen des Anhängers" wird dabei das Fahrgestell oder Chassis des Anhängers verstanden.

In weiteren vorteilhaften Ausgestaltungen der erfindungsgemäßen Montagevorrichtung weisen die Halteelemente jeweils quer von den Halteplatten abstehende untere Profilschenkel auf, die derart ausgebildet sind, dass sie in montiertem Zustand einen von dem Mittelsteg des Längsträgers quer abstehenden Untergurt umfassen. Des Weiteren besteht die Möglichkeit, dass die unteren Profilschenkel derart ausgebildet sind, dass sie in montiertem Zustand zumindest teilweise an dem Untergurt beidseitig anliegen. Zudem besteht die Möglichkeit, dass die unteren Profilschenkel in montiertem Zustand jeweils an einer vom Mittelsteg abgewandten Kante des Untergurts enden und/oder darüber hinausragen. Die unteren Profilschenkel können dabei form- oder kraftschlüssig miteinander verbindbar sein, sodass es zu einer sicheren Verbindung der Halteelemente der Montagevorrichtung in montiertem Zustand kommt. Dabei besteht die Möglichkeit, dass die beiden unteren Profilschenkel mittels einer Klemmeinrichtung miteinander verbunden werden. Zudem besteht die Möglichkeit, dass diese über Verbindungsschrauben verbunden werden. Auch andere Befestigungs- und Verbindungsmöglichkeiten, wie zum Beispiel ein Verkleben und Verschweißen, insbesondere der beiden unteren Profilschenkel sind denkbar. Zudem besteht die Möglichkeit, dass mindestens eine Halteplatte der Halteelemente weitere Öffnungen aufweist, die mit entsprechenden Öffnungen im Mittelsteg des Längsträgers korrespondieren. Durch diese Öffnungen können dann die Halteelemente miteinander und/oder mit dem Mittelsteg des Längsträgers verbunden, insbesondere verschraubt werden. Des Weiteren besteht natürlich die Möglichkeit, dass die Halteplatten der Halteelemente jeweils mit der Innen- beziehungsweise Außenseite des Mittelstegs verschweißt werden.

Für den Fall, dass die unteren Profilschenkel in montiertem Zustand jeweils über die vom Mittelsteg abgewandte Kante des Untergurts hinausragen, können wiederum durch entsprechende korrespondierende Öffnungen Schraubverbindungen angebracht werden. Auch eine Klemmung, ein Verschweißen oder Verkleben der überstehenden Bereiche der unteren Profilschenkel ist denkbar. Insbesondere besteht die Möglichkeit, dass die unteren Profilschenkel mindestens einer Schraub- und/oder Klemmverbindung lösbar miteinander verbindbar sind. Vorteilhafterweise kann hierbei die Verbindung zwischen den unteren Profilschenkeln wieder gelöst werden. Dies ist insbesondere bei Reparaturen oder Wartungsarbeiten, die den Hilfsantrieb betreffen, notwendig und von Vorteil. Des Weiteren können die unteren Profilschenkel derart ausgebildet sind, dass sie in montiertem Zustand zumindest teilweise an dem Untergurt beidseitig anliegen.

In weiteren vorteilhaften Ausgestaltungen der erfindungsgemäßen Montagevorrichtung weist der Führungsstutzen einen geschlossenen oder offenen Querschnitt auf. Die Querschnittsform des Führungsstutzens kann einer Querschnittsform des Tragarms des Hilfsantriebs entsprechen. Dabei kann der Querschnitt der Führungsstutzens quadratisch, rechteckig, rund, U-förmig oder halbkreisförmig ausgebildet sein. Auch andere Querschnittsformen sind denkbar und richten sich insbesondere nach der Querschnittsform des aufzunehmenden Tragarms des Hilfsantriebs. Dabei kann ein Innendurchmesser des Führungsstutzens einem Außendurchmesser des Tragarms des Hilfsantriebs entsprechen oder geringfügig größer sein. Unter geringfügig größer wird eine Abweichung von bis zu 10 % des Außendurchmessers des Tragarms verstanden. Insbesondere ist der Innendurchmesser des Führungsstutzens derart ausgebildet, dass der Tragarm einerseits in den Führungsstutzen ohne Probleme eingelegt oder durch ihn hindurchgeführt geführt werden kann und andererseits ein fester Sitz des Tragarms in dem Führungsstutzen gewährleistet ist. Dabei kann auch die Form der Öffnung in der Halteplatte des gegenüberliegenden Halteelements der Querschnittsform des Führungsstutzens entsprechen. Des Weiteren besteht die Möglichkeit, dass der Tragarm und/oder der Führungsstutzen mindestens ein Ausgleichs- oder Abstützelement zum Ausgleich eines zu großen Unterschieds zwischen dem Außendurchmesser des Tragarms und dem Innendurchmesser des Führungsstutzens aufweist.

In weiteren vorteilhaften Ausgestaltungen der erfindungsgemäßen Montagevorrichtung ist an dem Führungsstutzen mindestens eine Stützstrebe angeordnet, wobei ein dem Führungsstutzen gegenüberliegendes Ende der Stützstrebe an dem unteren Profilschenkel des Halteelements abgestützt ist. Die Anordnung der Stützstrebe führt zu einer Versteifung des Halteelements und ermöglicht eine erhöhte Aufnahme von Kräften, ohne dass es zu einer Verwindung des Halteelements oder der Montagevorrichtung insgesamt kommt. Die Stützstrebe kann an dem Führungsstutzen und dem unteren Profilschenkel angeschweißt sein. Des Weiteren besteht die Möglichkeit, dass in dem Führungsstutzen und/oder an einem an dem Führungsstutzen angeordneten Verstärkungselement mindestens eine Gewindebohrung zur Aufnahme einer Fixierschraube ausgebildet ist. Die Fixierschraube kann bis an die Oberfläche des Tragarms, welcher in dem Führungsstutzen angeordnet ist, bewegt werden, sodass es zu einer Lagefixierung des Tragarms im Führungsstutzen kommt.

In weiteren vorteilhaften Ausgestaltungen der erfindungsgemäßen Montagevorrichtung ist das erste Halteelement im Querschnitt ungefähr L- oder U-förmig ausgebildet. Das zweite Halteelement kann im Querschnitt L- oder S-förmig ausgebildet sein. Das erste Halteelement dient dabei insbesondere zur Anlage an einer Innenseite des Längsträgers des Stützrahmens des Anhängers. Unter Innenseite wird dabei eine von einem Anhängerrad abgewandte Seite des Längsträgers verstanden. Das zweite Halteelement ist insbesondere zur Anlage an der Außenseite, das heißt der dem Anhängerrad zugewandten Seite des Längsträgers ausgebildet. Je nach Anforderungen an die strukturellen Vorgaben des Längsträgers besteht vorteilhafterweise die Möglichkeit die Halteelemente unterschiedlich auszubilden. Zur Ausbildung von U- oder S-Formen weisen die Halteelemente zusätzliche obere Profilschenkel auf, die quer zu den Halteplatten ausgebildet sind. Auch weitere Querschnittsformen sind denkbar und richten sich insbesondere nach den vorgegebenen strukturellen Ausgestaltungen des Längsträgers.

In weiteren vorteilhaften Ausgestaltungen der erfindungsgemäßen Montagevorrichtung weisen die Halteplatte des ersten Halteelements und/oder die Halteplatte des zweiten Halteelements weitere Öffnungen zur Aufnahme von Verbindungselementen oder für den Durchtritt von Elementen des Anhängers oder der Montagevorrichtung auf. Dabei kann die Anordnung dieser Öffnungen in montiertem Zustand der Montagevorrichtung zumindest teilweise einem Lochbild von in dem Mittelsteg des Längsträgers ausgebildeten Öffnungen entsprechen. Dadurch besteht die Möglichkeit, Verbindungselemente, wie zum Beispiel Verbindungsschrauben über bereits vorhandene Öffnungen im Mittelsteg und entsprechende Öffnungen in den Halteelementen hindurchzuführen und die beiden Halteelemente miteinander zu verbinden. Dies kann dabei ohne Veränderungen der vorgegebenen strukturellen Eigenschaften des Längsträgers erfolgen.

Die Erfindung betrifft weiterhin einen Anhänger, insbesondere Wohnwagen, Bootsanhänger, Verkaufswagen, Transportanhänger oder Autotransportanhänger, umfassend mindestens einer Montagevorrichtung wie im Vorhergehenden beschrieben. Die unterschiedlichen Ausführungsformen und deren Vorteile ergeben sich aus den vorhergehenden Ausführungen zu den erfindungsgemäßen Ausgestaltungen der Montagevorrichtung.

In vorteilhaften Ausgestaltungen des erfindungsgemäßen Anhängers umfasst der Stützrahmen des Anhängers mindestens zwei parallel zueinander verlaufende Längsträger. Es ist aber auch möglich, dass der Stützrahmen zwei V-förmig zueinander angeordnete Längsträger umfasst. Vorteilhafterweise ist die Montagevorrichtung derart ausgebildet, dass sie an einer Vielzahl von Längsträgertypen angeordnet und damit verwendet werden kann. Der Stützrahmen kann zumindest teilweise aus einem Leichtmetall, einem faserverstärktem Kunststoff oder einer Kombination aus diesen Materialien bestehen.

Die Erfindung betrifft weiterhin einen Stützrahmen eines Anhängers, insbesondere eines Wohnwagens, eines Bootsanhängers, eines Verkaufswagens, eines Transportanhängers oder eines Autotransportanhängers, umfassend mindestens eine Montagevorrichtung wie im Vorhergehenden beschrieben. Die unterschiedlichen Ausführungsformen und deren Vorteile ergeben sich aus den vorhergehenden Ausführungen zu den erfindungsgemäßen Ausgestaltungen der Montagevorrichtung.

Weitere Vorteile, Merkmale und Einzelheiten der Erfindung ergeben sich aus der nachfolgenden Beschreibung zweier Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen, oder in Alleinstellung verwendbar, ohne den Rahmen der Erfindung zu verlassen.

Es zeigen
- Figur 1: eine schematische Darstellung einer erfindungsgemäßen Montagevorrichtung für einen Hilfsantrieb in montiertem Zustand;
- Figur 2: eine schematische Darstellung der erfindungsgemäßen Montagevorrichtung gemäß Figur 1 aus einem anderen Blickwinkel;
- Figur 3: eine schematische Darstellung der erfindungsgemäßen Montagevorrichtung gemäß Figur 1 in nicht-montiertem Zustand; und
- Figur 4: eine schematische Darstellung einer erfindungsgemäßen Montagevorrichtung gemäß einem weiteren Ausführungsbeispiel in nicht-montiertem Zustand.

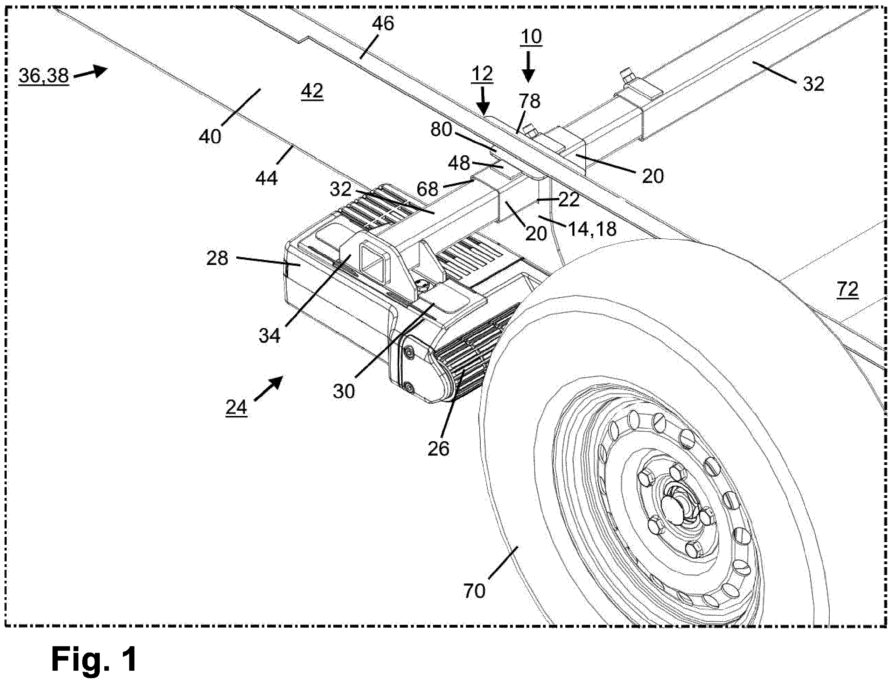

Die Figur 1 zeigt eine schematische Darstellung einer Montagevorrichtung 10 für einen Hilfsantrieb 24 in montiertem Zustand. Bei dem Hilfsantrieb 24 handelt es sich um einen zusätzlichen Antrieb für einen Anhänger 36, insbesondere einen Wohnwagen. Unter Anhänger werden aber zudem beispielsweise Bootsanhänger, Verkaufswagen, Transportanhänger oder Autotransportanhänger oder ähnliche Anhänger verstanden. Man erkennt, dass der Hilfsantrieb 24 an einem Stützrahmen 38 des Anhängers 36 mittels der Montagevorrichtung 10 angeordnet ist. Insbesondere ist der Hilfsantrieb 24 an einem Längsträger 40 des Stützrahmens 38 befestigt und abgestützt. Der Hilfsantrieb 24 umfasst dabei ein Antriebselement 26, wobei das Antriebselement 26 als Antriebswalze ausgebildet ist. Das Antriebselement 26 ist dabei in einer Gehäusehalterung eines Gehäuses 28 des Hilfsantriebs 24 drehbar gelagert. In Figur 1 ist der Hilfsantrieb 24 in einem nicht-zugeschwenkten Zustand dargestellt. Dies bedeutet, dass das Antriebselement 26 nicht in Eingriff mit einem Anhängerrad 70 steht. Um eine Bewegung des Anhängerrads 70 zu ermöglichen, muss das Antriebselement 26 in Eingriff mit dem Anhängerrad 70 gebracht werden. Durch eine Drehung des Antriebselements 26 wird dann das Anhängerrad 70 bewegt. Der Hilfsantrieb 24 umfasst zudem elektronische und elektrische Komponenten, wie zum Beispiel den Motor für das Antriebselement 26 sowie Anschwenkmotoren und - führungen zur Betätigung einer Zustellvorrichtung 30 für das Antriebselement 26 sowie eine Steuerelektronik (nicht dargestellt). Die zuletzt genannten Komponenten sind innerhalb des Gehäuses 28 des Hilfsantriebs 24 angeordnet. Das An- und Abschwenken des Antriebselements 26 erfolgt durch ein entsprechendes Verschieben von zumindest Teilelementen des Hilfsantriebs 24 relativ zum Stützrahmen 38 des Anhängers 36. Des Weiteren erkennt man, dass der Hilfsantrieb über ein Befestigungselement 34 mit einem Tragarm 32 verbunden ist. Der Tragarm 32 wird im Folgenden noch näher beschrieben.

Aus Figur 1 wird zudem deutlich, dass der Hilfsantrieb 24 von einer Außenseite des Längsträgers 40 des Stützrahmens 38 beabstandet angeordnet ist. Die Abstützung und Befestigung des Hilfsantriebs 24 an dem Stützrahmen 38 beziehungsweise dem Längsträger 40 erfolgt über die Montagevorrichtung 10.

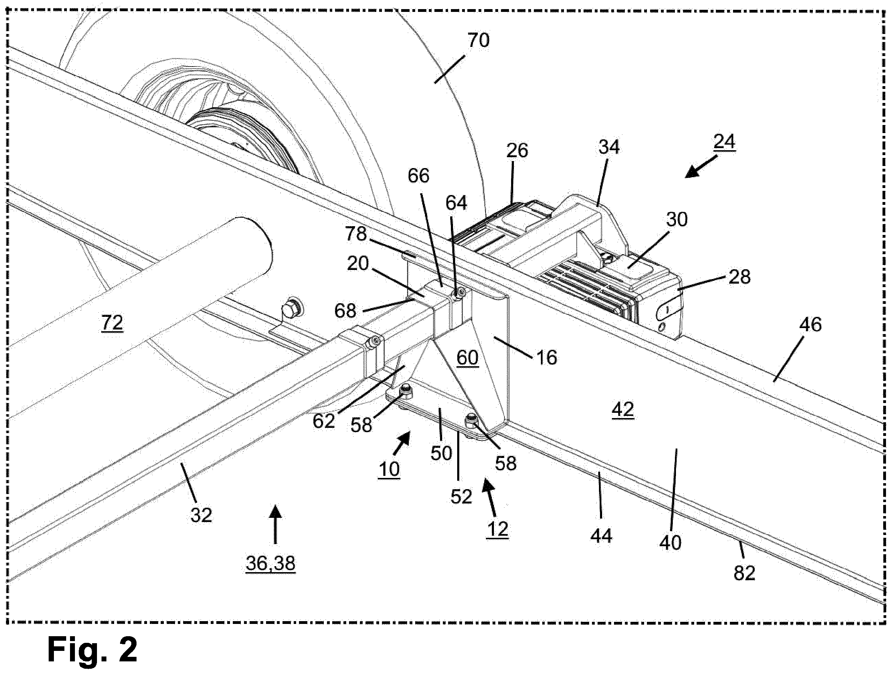

In Zusammenschau mit der Figur 2, die eine schematische Darstellung der Montagevorrichtung 10 gemäß Figur 1 aus einem anderen Blickwinkel zeigt, erkennt man, dass die Montagevorrichtung 10 zwei miteinander verbindbare Halteelemente 12, 14 umfasst. Ein erstes Halteelement 12 ist dabei in montiertem Zustand an einer Innenseite des Längsträgers 40 angeordnet (vergleiche Figur 2). Das zweite Halteelement 14 ist dagegen an einer Außenseite, das heißt einer dem Anhängerrad 70 zugewandten Seite des Längsträgers 40 angeordnet. Man erkennt, dass die Halteelemente 12, 14 insgesamt derart ausgebildet sind, dass sie in montiertem Zustand mit jeweils einer Halteplatte 16, 18 zumindest teilweise an einem aufrecht verlaufenden Mittelsteg 42 des Längsträgers 40 beidseitig anliegen. Des Weiteren erkennt man, dass die Halteplatte 16 des ersten Halteelements 12 einen Führungsstutzen 20 zur Aufnahme des Tragarms 32 des Hilfsantriebs 24 aufweist. Die andere Halteplatte 18 des zweiten Halteelements 14 weist dagegen eine korrespondierende Öffnung 22 zur Aufnahme und den Durchtritt des Führungsstutzens 20 auf. Dabei ist der Führungsstutzen 20 derart an der Halteplatte 16 angeordnet, dass er durch eine wiederum korrespondierende Öffnung 48 im Mittelsteg 42 des Längsträgers 40 durchführbar ist. An einer Oberseite des Führungsstutzens 20 ist zudem ein Verrast- oder Rückhalteelement 48 angeordnet. Dies dient zu sicheren Verrasten und den sicheren Rückhalt des Haltelements 14 an dem Führungsstutzen 20. Durch die Verbindung der beiden Halteelemente 12, 14 ergibt sich eine sichere Befestigung der Montagevorrichtung 10 an dem Längsträger 40 und damit eine sichere Befestigung und Abstützung des Hilfsantriebs 24, ebenfalls an dem Längsträger 40.

Des Weiteren wird deutlich, dass die Halteelemente 12, 14 jeweils quer von den Halteplatten 16, 18 abstehende untere Profilschenkel 50, 52 aufweisen. Die unteren Profilschenkel 50, 52 sind dabei derart ausgebildet, dass sie in montiertem Zustand einen von dem Mittelsteg 42 des Längsträgers 40 quer abstehenden Untergurt 44 umfassen (vergleiche Figur 2). Der Untergurt 44 ragt dabei von der Innenseite des Längsträgers 40 quer in eine von dem Anhängerrad 70 abgewandte Richtung. Aus Figur 2 wird zudem deutlich, dass die unteren Profilschenkel 50, 52 in montiertem Zustand jeweils über eine vom Mittelsteg 42 abgewandte Kante 82 des Untergurts 44 hinausragen. In den über die Kante 82 hinausragenden Bereichen weisen die unteren Profilschenkel 50, 52 miteinander fluchtende Öffnungen 54, 56 zur Aufnahme von Schraubverbindungen 58 auf. Über die Schraubverbindungen 58 sind die Halteelemente 12, 14 miteinander verbunden und zudem an dem Längsträger 40 befestigt. Anstelle der Schraubverbindungen 58 könnten hierbei auch beispielsweise Klemmvorrichtungen verwendet werden.

In der Zusammenschau der Figuren 1 und 2 wird zudem deutlich, dass das erste Halteelement 12 im Querschnitt U-förmig ausgebildet ist. Neben dem unteren Profilschenkel 50 weist das erste Halteelement 12 zudem einen dem unteren Profilschenkel 50 gegenüberliegenden oberen Profilschenkel 78 auf, der ebenfalls quer zum Mittelsteg 42 ausgebildet ist. Das zweite Halteelement 14 weist dagegen einen S-förmigen Querschnitt auf. Hierbei ist an dem dem unteren Profilschenkel 52 gegenüberliegenden Ende ein quer von der Halteplatte 18 abstehender oberer Profilschenkel 80 ausgebildet. Der obere Profilschenkel 80 weist dabei in Richtung des Anhängerrads 70. Das Anhängerrad 70 ist dabei an einer Radachse 72 angeordnet.

Des Weiteren erkennt man, dass an dem Führungsstutzen 20 zwei Stützstreben 60, 62 angeordnet sind, wobei die dem Führungsstutzen 20 gegenüberliegenden Enden der Stützstreben 60, 62 an dem unteren Profilschenkel 50 abgestützt und befestigt sind (vergleiche Figur 2). Zudem ist an dem Führungsstutzen 20 ein Verstärkungselement 66 angeordnet, wobei durch das Verstärkungselement 66 und den Führungsstutzen 20 eine Gewindebohrung 64 zur Aufnahme einer Fixierschraube ausgebildet ist. Des Weiteren ist aus Figur 1 erkennbar, dass die Form der Öffnung 22 in der Halteplatte 18 des Halteelements 14 der Querschnittsform des Führungsstutzens 20 entspricht. Zudem entspricht ein Innendurchmesser des Führungsstutzens 20 einem Außendurchmesser des Tragarms 32 oder ist geringfügig größer. Entscheidend ist dabei, dass der Tragarm sicher in dem Führungsstutzen 20 geführt beziehungsweise gelagert ist. Ein übermäßiges Spiel aufgrund unterschiedlicher Durchmesser sollte vermieden werden. Eine Aufnahmeöffnung 68 des Führungsstutzens 20 entspricht dem Querschnitt der Querschnittsform des Tragarms 32.

Des Weiteren erkennt man, dass der Längsträger 40 ebenfalls U-förmig ausgebildet ist. Dieser weist hierzu einen dem Untergurt 44 gegenüberliegenden Obergurt 46 auf, der ebenfalls quer zum Mittelsteg 42 ausgebildet ist.

In den Figuren 1 und 2 ist jeweils nur ein Längsträger 40 des Stützrahmens 38 dargestellt. Die Ausgestaltung der Montagevorrichtung 10 sowie die Befestigung und Abstützung des Hilfsantriebs 24 kann an einem zweiten, parallel zum Längsträger 40 ausgebildeten zweiten Längsträger (nicht dargestellt) identisch oder nahezu identisch ausgeführt werden. Entsprechendes gilt, wenn die Längsträger nicht parallel, sondern V-förmig aufeinander zulaufend ausgebildet sind. An den gegenüberliegenden Enden des Tragarms 32 kann dabei jeweils mindestens ein Hilfsantrieb angeordnet sein. Der Tragarm 32 kann einstückig oder aus mehreren Elementen zusammengesetzt sein. Bei einer Ausgestaltung des Tragarms 32 aus mehreren Elementen kann dieser insgesamt teleskopierbar ausgebildet sein. Im Querschnitt kann der Tragarm 32 geschlossen (siehe Figuren 1 und 2) oder offen ausgestaltet sein (nicht dargestellt).

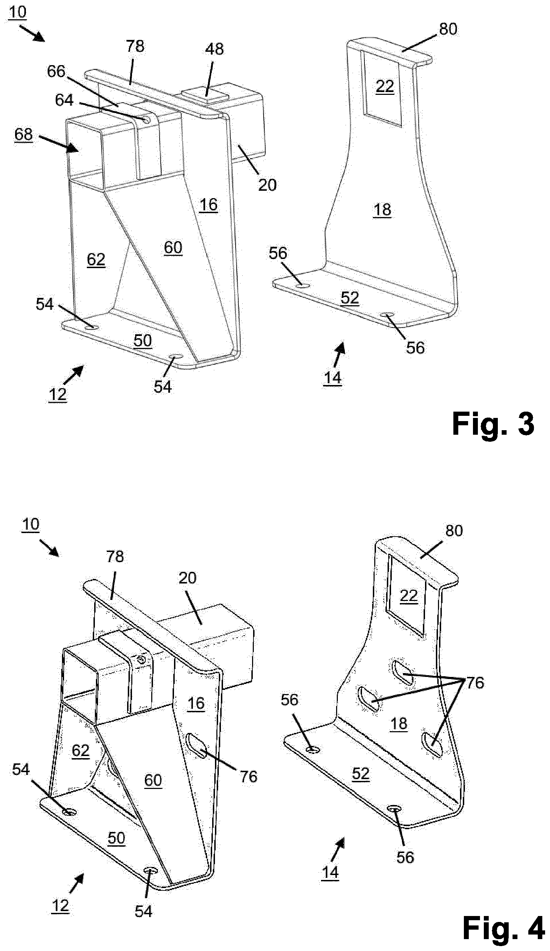

Figur 3 zeigt eine schematische Darstellung der Montagevorrichtung 10 in nicht-montiertem Zustand. Man erkennt die Ausgestaltung der Halteelemente 12, 14. Das Halteelement 12 ist dabei grundsätzlich im Querschnitt U-förmig ausgebildet und umfasst den Untergurt 50, die Halteplatte 16 und den Obergurt 78. Zudem weist das erste Halteelement 12 den Führungsstutzen 20 auf, der über zwei Stützstreben 60, 62 an dem unteren Profilschenkel 50 abgestützt ist. In dem dargestellten Ausführungsbeispiel weist der Führungsstutzen 20 einen geschlossenen Querschnitt auf. Dieser ist ungefähr quadratisch ausgebildet. Es ist aber auch möglich, dass der Führungsstutzen einen offenen Querschnitt aufweist. Zudem sind weitere Querschnittsformen, wie zum Beispiel rechteckige, runde, U-förmige, ovale oder halbkreisförmige sowie andere vieleckige Querschnittsformen denkbar. Des Weiteren erkennt man, dass die Form der Öffnung 22 in der Halteplatte 18 des zweiten Halteelements der Querschnittsform des Führungsstutzens 20 entspricht. An einer Oberseite des Führungsstutzens 20 ist das Verrast- oder Rückhalteelement 48 angeordnet. Es dient zu sicheren Verrasten und den sicheren Rückhalt des Haltelements 14 an dem Führungsstutzen 20. Die Anordnung und Ausgestaltung der Durchtrittsöffnungen 54, 56 in den unteren Profilschenkeln 50, 52 wurde bereits im Vorhergehenden beschrieben.

Figur 4 zeigt in einer schematischen Darstellung eine weitere Ausführungsform der Montagevorrichtung 10 in nicht-montiertem Zustand. Man erkennt, dass bei dieser Ausführungsform weitere Öffnungen 76 in den Halteplatten 16, 18 der Halteelemente 12, 14 ausgebildet sind. Diese dienen insbesondere zur Aufnahme von Verbindungselementen oder für den Durchtritt von Elementen des Anhängers 36 oder der Montagevorrichtung 10. Die Anordnung der Öffnungen 76 entspricht dabei in montiertem Zustand der Montagevorrichtung 10 zumindest teilweise einem Lochbild von in dem Mittelsteg 42 des Längsträgers 40 ausgebildeten Öffnungen. Durch diese Öffnungen können insbesondere Verbindungselemente, wie zum Beispiel Schraubverbindungen geführt werden. In weiterem Unterschied zu der in Figur 3 dargestellten Ausführungsform der Montagevorrichtung 10 weist diese kein am Führungsstutzen 20 angeordnetes Verrastelement auf. Im Übrigen entspricht die in Figur 4 dargestellte Ausführungsform der Montagevorrichtung 10 der in Figur 3 dargestellten ersten Ausführungsform.

Die Montagevorrichtung 10 besteht üblicherweise aus Metall oder Kunststoff oder einer Kombination daraus.

## Patentansprüche

1. Montagevorrichtung zur Befestigung und Abstützung eines Hilfsantriebs (24) an einem Längsträger (40) eines Stützrahmens (38) eines Anhängers (36), insbesondere einem Wohnwagen, einem Bootsanhänger, einem Verkaufswagen, einem Transportanhänger oder einem Autotransportanhänger, wobei die Montagevorrichtung (10) mindestens zwei miteinander verbindbare Halteelemente (12, 14) umfasst und die Halteelemente (12, 14) derart ausgebildet sind, dass sie in montiertem Zustand mit jeweils einer Halteplatte (16, 18) zumindest teilweise an einem aufrecht verlaufenden Mittelsteg (42) des Längsträgers (40) beidseitig anliegen, **dadurch gekennzeichnet, dass** eine der Halteplatten (16) einen Führungsstutzen (20) zur Aufnahme eines Tragarms (32) des Hilfsantriebs (24) und die andere Halteplatte (18) eine korrespondierende Öffnung (22) zur Aufnahme und den Durchtritt des Führungsstutzens (20) aufweist, wobei der Führungsstutzen (20) derart an der Halteplatte (16) angeordnet ist, dass er durch eine korrespondierende Öffnung (48) im Mittelsteg (42) des Längsträgers (40) durchführbar ist.

2. Montagevorrichtung nach Anspruch 1, **dadurch gekennzeichnet, dass** die Halteelemente (12, 14) jeweils quer von den Halteplatten (16, 18) abstehende untere Profilschenkel (50, 52) aufweisen, die derart ausgebildet sind, dass sie in montiertem Zustand einen von dem Mittelsteg (42) des Längsträgers (40) quer abstehenden Untergurt (44) umfassen.

3. Montagevorrichtung nach Anspruch 2, **dadurch gekennzeichnet, dass** die unteren Profilschenkel (50, 52) derart ausgebildet sind, dass sie in montiertem Zustand jeweils an einer vom Mittelsteg (42) abgewandten Kante (82) des Untergurts (44) enden und/oder darüber hinausragen.

4. Montagevorrichtung nach Anspruch 2 oder 3, **dadurch gekennzeichnet, dass** die unteren Profilschenkel (50, 52) derart ausgebildet sind, dass sie in montiertem Zustand zumindest teilweise an dem Untergurt (44) beidseitig anliegen.

5. Montagevorrichtung nach Anspruch 3 oder 4, **dadurch gekennzeichnet, dass** die unteren Profilschenkel (50, 52) form- oder kraftschlüssig miteinander verbindbar sind oder dass die unteren Profilschenkel (50, 52) form- oder kraftschlüssig miteinander verbindbar sind und die unteren Profilschenkel (50, 52) mittels mindestens einer Schraub- und/oder Klemmverbindung (58) lösbar miteinander verbindbar sind.

6. Montagevorrichtung nach einem der vorhergehenden Ansprüche, **dadurch gekennzeichnet, dass** der Führungsstutzen (20) einen geschlossenen oder offenen Querschnitt aufweist oder dass der Führungsstutzen (20) einen geschlossenen oder offenen Querschnitt aufweist und die Querschnittsform des Führungsstutzens (20) einer Querschnittsform des Tragarms (32) des Hilfsantriebs (24) entspricht.

7. Montagevorrichtung nach Anspruch 6, **dadurch gekennzeichnet, dass** eine Form der Öffnung (22) in der Halteplatte (18) des Halteelements (14) der Querschnittsform des Führungsstutzens (20) entspricht.

8. Montagevorrichtung nach einem der vorhergehenden Ansprüche, **dadurch gekennzeichnet, dass** ein Innendurchmesser des Führungsstutzens (20) einem Außendurchmesser des Tragarms (32) des Hilfsantriebs (24) entspricht oder geringfügig größer ist.

9. Montagevorrichtung nach einem der vorhergehenden Ansprüche, **dadurch gekennzeichnet, dass** an dem Führungsstutzen (20) mindestens eine Stützstrebe (60, 62) angeordnet ist, wobei ein dem Führungsstutzen (20) gegenüberliegendes Ende der Stützstrebe (60, 62) an dem unteren Profilschenkel (50) abgestützt ist.

10. Montagevorrichtung nach einem der vorhergehenden Ansprüche, **dadurch gekennzeichnet, dass** in dem Führungsstutzen (20) und/oder einem an dem Führungsstutzen (20) angeordnetem Verstärkungselement (66) mindestens eine Gewindebohrung (64) zur Aufnahme einer Fixierschraube ausgebildet ist.

11. Montagevorrichtung nach einem der vorhergehenden Ansprüche, **dadurch gekennzeichnet, dass** das erste Halteelement (12) im Querschnitt ungefähr L- oder U-förmig ausgebildet ist oder dass das zweite Halteelement (14) im Querschnitt L- oder S-förmig ausgebildet ist.

12. Montagevorrichtung nach einem der vorhergehenden Ansprüche, **dadurch gekennzeichnet, dass** die Halteplatte (16) des ersten Halteelements (12) und/oder die Halteplatte (18) des zweiten Halteelements (14) weitere Öffnungen (76) zur Aufnahme von Verbindungselementen oder für den Durchtritt von Elementen des Anhängers (36) oder der Montagevorrichtung (10) aufweisen oder dass die Halteplatte (16) des ersten Halteelements (12) und/oder die Halteplatte (18) des zweiten Halteelements (14) weitere Öffnungen (76) zur Aufnahme von Verbindungselementen oder für den Durchtritt von Elementen des Anhängers (36) oder der Montagevorrichtung (10) aufweisen und die Anordnung der Öffnungen (76) in montiertem Zustand der Montagevorrichtung (10) zumindest teilweise einem Lochbild von in dem Mittelsteg (42) des Längsträgers (40) ausgebildeten Öffnungen entspricht.

13. Anhänger, insbesondere Wohnwagen, Bootsanhänger, Verkaufswagen, Transportanhänger oder Autotransportanhänger, umfassend mindestens einen Hilfsantrieb (24) und mindestens eine Montagevorrichtung (10) gemäß einem der den Ansprüche 1 bis 12 zur Befestigung und Abstützung des Hilfsantriebs (24) an einem Längsträger (40) eines Stützrahmens (38) des Anhängers (36).

14. Anhänger nach Anspruch 13, **dadurch gekennzeichnet, dass** der Stützrahmen (38) mindestens zwei parallel zueinander verlaufende Längsträger (40) umfasst oder dass der Stützrahmen (38) zwei V-förmig zueinander angeordnete Längsträger (40) umfasst.

15. Anhänger nach einem der Ansprüche 13 oder 14, **dadurch gekennzeichnet, dass** der Stützrahmen (38) zumindest teilweise aus einem Leichtmetall, einem faserverstärktem Kunststoff oder einer Kombination aus diesen Materialien besteht.

16. Stützrahmen eines Anhängers (36), insbesondere eines Wohnwagens, eines Bootsanhängers, eines Verkaufswagens, eines Transportanhängers oder eines Autotransportanhängers, umfassend mindestens eine Montagevorrichtung (10) gemäß einem der Ansprüche 1 bis 12 zur Befestigung und Abstützung eines Hilfsantriebs (24) an einem Längsträger (40) des Stützrahmens (38).

## Claims

1. An assembly device for attaching and supporting an auxiliary drive (24) on a longitudinal beam (40) of a supporting frame (38) of a trailer (36), in particular a caravan, a boat trailer, a sales vehicle, a transport trailer or a car transport trailer, wherein the assembly device (10) includes at least two retaining elements (12, 14) connectable to each other and the retaining elements (12, 14) are formed such that they at least partially abut on an upright extending central web (42) of the longitudinal beam (40) on both sides with each one retaining plate (16, 18) in the assembled state, **characterized in that** one of the retaining plates (16) comprises a guide socket (20) for receiving a supporting arm (32) of the auxiliary drive (24) and the other retaining plate (18) comprises a corresponding opening (22) for receiving and the passage of the guide socket (20), wherein the guide socket (20) is arranged on the retaining plate (16) such that it can be passed through a corresponding opening (48) in the central web (42) of the longitudinal beam (40).

2. The assembly device according to claim 1, **characterized in that** the retaining elements (12, 14) each comprise bottom profile legs (50, 52) transversely protruding from the retaining plates (16, 18), which are formed such that they encompass a bottom chord (44) transversely protruding from the central web (42) of the longitudinal beam (40) in the assembled state.

3. The assembly device according to claim 2, **characterized in that** the bottom profile legs (50, 52) are formed such that they each terminate at and/or protrude beyond an edge (82) of the bottom chord (44) facing away from the central web (42) in the assembled state.

4. The assembly device according to claim 2 or 3, **characterized in that** the bottom profile legs (50, 52) are formed such that they at least partially abut on the bottom chord (44) on both sides in the assembled state.

5. The assembly device according to claim 3 or 4, **characterized in that** the bottom profile legs (50, 52) are connectable to each other in form- or force-fit manner or
that the bottom profile legs (50, 52) are connectable to each other in form- or force-fit manner and the bottom profile legs (50, 52) are detachably connectable to each other by means of at least one screw and/or clamping connection (58).

6. The assembly device according to any one of the preceding claims, **characterized in that** the guide socket (20) has a closed or open cross-section or
that the guide socket (20) has a closed or open cross-section and the cross-sectional shape of the guide socket (20) corresponds to a cross-sectional shape of the supporting arm (32) of the auxiliary drive (24).

7. The assembly device according to claim 6, **characterized in that** a shape of the opening (22) in the retaining plate (18) of the retaining element (14) corresponds to the cross-sectional shape of the guide socket (20).

8. The assembly device according to any one of the preceding claims, **characterized in that** an internal diameter of the guide socket (20) corresponds to or is slightly larger than an external diameter of the supporting arm (32) of the auxiliary drive (24).

9. The assembly device according to any one of the preceding claims, **characterized in that** at least one support strut (60, 62) is arranged on the guide socket (20), wherein an end of the support strut (60, 62) opposing the guide socket (20) is supported on the bottom profile leg (50).

10. The assembly device according to any one of the preceding claims, **characterized in that** at least one threaded bore (64) for receiving a fixing screw is formed in the guide socket (20) and/or a reinforcing element (66) arranged on the guide socket (20).

11. The assembly device according to any one of the preceding claims, **characterized in that** the first retaining element (12) is formed approximately L- or U-shaped in cross-section or that the second retaining element (14) is formed L- or S-shaped in cross-section.

12. The assembly device according to any one of the preceding claims, **characterized in that** the retaining plate (16) of the first retaining element (12) and/or the retaining plate (18) of the second retaining element (14) comprise further openings (76) for receiving connecting elements or for the passage of elements of the trailer (36) or the assembly device (10) or
that the retaining plate (16) of the first retaining element (12) and/or the retaining plate (18) of the second retaining element (14) comprise further openings (76) for receiving connecting elements or for the passage of elements of the trailer (36) or the assembly device (10), and the arrangement of the openings (76) at least partially corresponds to a hole pattern of openings formed in the central web (42) of the longitudinal beam (40) in the assembled state of the assembly device (10).

13. A trailer, in particular caravan, boat trailer, sales vehicle, transport trailer or car transport trailer, including at least one auxiliary drive (24) and at least one assembly device (10) according to any one of claims 1 to 12 for attaching and supporting the auxiliary drive (24) on a longitudinal beam (40) of a supporting frame (38) of the trailer (36).

14. The trailer according to claim 13, **characterized in that** the supporting frame (38) includes at least two longitudinal beams (40) extending parallel to each other or that the supporting frame (38) includes two longitudinal beams (40) arranged V-shaped to each other.

15. The trailer according to any one of claims 13 or 14, **characterized in that** the supporting frame (38) is at least partially composed of a light metal, a fiber-reinforced plastic or a combination of these materials.

16. A supporting frame of a trailer (36), in particular of a caravan, a boat trailer, a sales vehicle, a transport trailer or a car transport trailer, including at least one assembly device (10) according to any one of claims 1 to 12 for attaching and supporting an auxiliary drive (24) on a longitudinal beam (40) of the supporting frame (38).

## Revendications

1. Mécanisme de montage, destiné à fixer et à soutenir une propulsion auxiliaire (24) sur un longeron (40) d'un cadre de support (38) d'une remorque (36), en particulier une caravane, une remorque à bateaux, un véhicule de vente, une remorque de transport ou une remorque de transport de voitures, le mécanisme de montage (10) comprenant au moins deux éléments de maintien (12, 14), pouvant être reliés entre eux et les éléments de maintien (12, 14) sont constitués de telle sorte qu'ils adhèrent des deux côtés, à l'état monté avec respectivement une plaque de maintien (16, 18), au moins en partie, à une barre centrale (42), évoluant droite, du longeron (40),
**caractérisé en ce que**
l'une des plaques de maintien (16) présente un embout de guidage (20), destiné à loger un bras porteur (32) de la propulsion auxiliaire (24) et l'autre plaque de maintien (18) une ouverture (22) correspondante, destinée au logement et au passage de l'embout de guidage (20), l'embout de guidage (20) étant agencé sur la plaque de maintien (16) de telle sorte qu'il peut être exécuté par une ouverture (48) correspondante dans la barre centrale (42) du longeron (40).

2. Mécanisme de montage selon la revendication 1,
**caractérisé en ce que**
les éléments de maintien (12, 14) présentent respectivement des ailes de profilés inférieures (50, 52), éloignées transversalement des plaques de maintien (16, 18), qui sont constituées de telle sorte qu'elles comprennent, à l'état monté, une membrure inférieure (44), éloignée transversalement de la barre centrale (42) du longeron (40).

3. Mécanisme de montage selon la revendication 2,
**caractérisé en ce que**
les ailes de profilés inférieures (50, 52) sont constituées de telle sorte qu'elles se terminent et / ou dépassent, à l'état monté, respectivement à un bord (82), éloigné de la barre centrale (42), de la membrure inférieure (44).

4. Mécanisme de montage selon la revendication 2 ou 3,
**caractérisé en ce que**
les ailes de profilés inférieures (50, 52) sont constituées de telle sorte qu'elles adhèrent des deux côtés, à l'état monté, au moins en partie à la membrure inférieure (44).

5. Mécanisme de montage selon la revendication 3 ou 4,
**caractérisé en ce que**
les ailes de profilés inférieures (50, 52) peuvent être reliées l'une à l'autre par complémentarité de forme ou de force ou que les ailes de profilés inférieures (50, 52) peuvent être reliées l'une à l'autre par complémentarité de forme ou de force et que les ailes de profilés inférieures (50, 52) peuvent être reliées l'une à l'autre de manière amovible au moyen au moins d'une liaison par vissage et / ou par serrage (58).

6. Mécanisme de montage selon l'une des revendications qui précèdent,
**caractérisé en ce que**
l'embout de guidage (20) présente une section fermée ou ouverte ou que l'embout de guidage (20) présente une section fermée ou ouverte et que la forme de la section de l'embout de guidage (20) correspond à une forme de la section du bras porteur (32) de la propulsion auxiliaire (24).

7. Mécanisme de montage selon la revendication 6,
**caractérisé en ce**
**qu'**une forme de l'ouverture (22) dans la plaque de maintien (18) de l'élément de maintien (14) correspond à la forme de la section de l'embout de guidage (20).

8. Mécanisme de montage selon l'une des revendications qui précèdent,
**caractérisé en ce**
**qu'**un diamètre intérieur de l'embout de guidage (20) correspond à un diamètre extérieur du bras porteur (32) de la propulsion auxiliaire (24) ou est légèrement plus grand.

9. Mécanisme de montage selon l'une des revendications qui précèdent,
**caractérisé en ce**
**qu'**au moins un montant support (60, 62) est agencé sur l'embout de guidage (20), une extrémité, opposée à l'embout de guidage (20), du montant support (60, 62) venant en appui sur l'aile de profilé inférieure (50).

10. Mécanisme de montage selon l'une des revendications qui précèdent,
**caractérisé en ce**
**qu'**au moins un trou taraudé (64), destiné à loger une vis de fixation, est constitué dans l'embout de guidage (20) et / ou un élément de renforcement (66), agencé sur l'embout de guidage (20).

11. Mécanisme de montage selon l'une des revendications qui précèdent,
**caractérisé en ce que**
le premier élément de maintien (12) est constitué en coupe transversale approximativement en forme de L ou de U ou que le second élément de maintien (14) est constitué en coupe transversale en forme de L ou de S.

12. Mécanisme de montage selon l'une des revendications qui précèdent,
**caractérisé en ce que**
la plaque de maintien (16) du premier élément de maintien (12) et / ou la plaque de maintien (18) du second élément de maintien (14) présentent des ouvertures (76) supplémentaires, destinées au logement d'éléments de liaison ou pour le passage d'éléments de la remorque (36) ou du mécanisme de montage (10) ou que la plaque de maintien (16) du premier élément de maintien (12) et / ou la plaque de maintien (18) du second élément de maintien (14) présentent des ouvertures (76) supplémentaires, destinées au logement d'éléments de liaison ou pour le passage d'éléments de la remorque (36) ou du mécanisme de montage (10) et que l'agencement des ouvertures (76) correspond, à l'état monté du mécanisme de montage (10), au moins en partie à un gabarit de trous d'ouvertures, constituées dans la barre centrale (42) du longeron (40).

13. Remorque, en particulier caravane, remorque à bateaux, véhicule de vente, remorque de transport ou remorque de transport de voitures, comprenant au moins une propulsion auxiliaire (24) et au moins un mécanisme de montage (10) conformément à l'une des revendications 1 à 12, destinée à fixer et à soutenir la propulsion auxiliaire (24) sur un longeron (40) d'un cadre de support (38) de la remorque (36).

14. Remorque selon la revendication 13,
**caractérisée en ce que**
le cadre de support (38) comprend au moins deux longerons (40), évoluant parallèlement l'un par rapport à l'autre ou que le cadre de support (38) comprend deux longerons (40), agencés en forme de V l'un par rapport à l'autre.

15. Remorque selon l'une des revendications 13 ou 14,
**caractérisée en ce que**
le cadre de support (38) se compose au moins en partie d'un métal léger, d'un plastique renforcé de fibres ou d'une combinaison de ces matériaux.

16. Cadre de support d'une remorque (36), en particulier d'une caravane, d'une remorque à bateaux, d'un véhicule de vente, d'une remorque de transport ou d'une remorque de transport de voitures, comprenant au moins un mécanisme de montage (10) conformément à l'une des revendications 1 à 12, destiné à fixer et à soutenir une propulsion auxiliaire (24) sur un longeron (40) du cadre de support (38).
